(19) Europäisches Patentamt

European Patent Office

Office européen des brevets

(11) **EP 0 851 843 B1**

(12) **EUROPEAN PATENT SPECIFICATION**

(45) Date of publication and mention
of the grant of the patent:
**07.04.2004 Bulletin 2004/15**

(51) Int Cl.⁷: **C02F 3/02**, B09C 1/00,
C09C 1/08, C09C 1/10,
C02F 3/22

(21) Application number: **96942016.5**

(22) Date of filing: **15.11.1996**

(86) International application number:
**PCT/US1996/018464**

(87) International publication number:
**WO 1997/039984 (30.10.1997 Gazette 1997/46)**

(54) **SUBSURFACE REMEDIATION METHOD AND APPARATUS**

METHODE UND APPARAT ZUR UNTERIRDISCHEN BIOLOGISCHEN SANIERUNG

PROCEDE ET APPAREIL PERMETTANT LA BIORESTAURATION SOUTERRAINE

(84) Designated Contracting States:
**AT BE CH DE DK ES FI FR GB GR IE IT LI LU MC NL PT SE**

(30) Priority: **25.04.1996 US 638017**

(43) Date of publication of application:
**08.07.1998 Bulletin 1998/28**

(73) Proprietor: **K.V. Associates, Inc.**
**Falmouth, MA 02540 (US)**

(72) Inventor: **KERFOOT, William, B.**
**Falmouth, MA 02540 (US)**

(74) Representative: **Price, Nigel John King**
**J.A. KEMP & CO.**
**14 South Square**
**Gray's Inn**
**London WC1R 5JJ (GB)**

(56) References cited:
CH-A- 642 563          GB-A- 2 185 901
GB-A- 2 216 113       JP-A- 4 126 542
JP-A- 57 021 995      US-A- 5 167 806
US-A- 5 205 927       US-A- 5 384 048

• PATENT ABSTRACTS OF JAPAN vol. 016, no. 076 (C-0914), 25 February 1992 (1992-02-25) & JP 03 267196 A (NIPPON NEICHIYUA ROMAN:KK), 28 November 1991 (1991-11-28)
• PATENT ABSTRACTS OF JAPAN vol. 018, no. 233 (C-1195) 28 April 1994 & JP 06 023 378 A (MATSUSHITA ELECTRIC IND CO LTD) 01 February 1994

**EP 0 851 843 B1**

**Description**

BACKGROUND OF INVENTION

1. FIELD OF INVENTION (Technical field)

The present invention relates to methods of remediation of dissolved chlorinated hydrocarbons in aquifer regions by injecting micro-fine bubbles effective for active in situ groundwater remediation for removal of dissolved chlorinated hydrocarbon solvents and dissolved hydrocarbon petroleum products.

2. BACKGROUND PRIOR ART

There is a well recognized need for cleanup of subsurface leachate plumes in aquifer regions and contaminated sites including in particular, dry-cleaning establishments and military air force bases. Applicant is aware of prior art devices that have used injection of air to facilitate biodegradation of plumes.

In US Patent No. 5,221,159, to Billings shows injection of air into aquifer regions to encourage biodegradation of leachate plumes which contain biodegradable organics together with simultaneous soil vacuum extraction to remove otherwise harmful by-products of remediation.

In US Patent No. 5,269,943, METHOD FOR TREATMENT OF SOILS CONTAMINATED WITH ORGANIC POLLUTANTS, to Wickramanayake shows a method for treating soil contaminated by organic compounds wherein an ozone containing gas is treated with acid to increase the stability of the ozone in the soil environment and the treated ozone applied to the contaminated soil to decompose the organic compounds.

US 5,167,806 discloses a method of treating water in a vessel to kill pathogenic micro-organisms by treatment with ozone.

JP-A-6023378 discloses a method for removal of contaminants in water in which the contaminants are gasified into ozone bubbles and transported to the surface. A Patent Abstracts of Japan for JP 04-126542 discloses an apparatus for generating fine bubbles.

US 5,205,927 discloses a method according to the pre-amble of claim 1

In US Patent No. 5,525,008, REMEDIATION APPARATUS AND METHOD FOR ORGANIC CONTAMINATION IN SOIL AND GROUNDWATER, to Wilson provides a method and apparatus for in-situ treatment of soil and groundwater contaminated with organic pollutants. It involves concentration of a reactive solution required to effect treatment of the contaminated area; injecting the reactive solution into one or more injectors that are inserted into the ground, scaled and positioned so as to assure flow and allowing reactive solution to flow through the contaminated area thereby reacting chemically. Preferably, the reactive solution is an aqueous solution of hydrogen peroxide and metallic salts.

In US Patent No. 5,178,755, UV-ENHANCED OZONE WASTEWATER TREATMENT SYSTEM, to Lacrosse ozonated liquid is mixed within a multi-stage clarifier system with waste water to be treated and suspended solids are removed.

However there has not been shown methods for remediating a site in a controlled manner of poorly biodegradable organics, particularly dissolved chlorinated solvents with micro-fine bubbles including a multi-gas oxidizing agent. In fact the Federal Agency (EPA, KERR Environmental Laboratory, ADA, Oklahoma) responsible for review of clean-up procedures at Marine Corp Air Base at Yuma, Arizona has determined that there is no prior references which disclose the use of the present invention and has ordered independent pilot tests to provide test results confirming the results previously obtained by the present invention.

'The methods of the present invention accomplishes this by employing microporous diffusers for injecting micro-fine bubbles containing encapsulated multi-gas oxidizing agent into aquifer regions. These micron-fine bubbles containing encapsulated multi-gas oxidizing agent are effective to strip organics from solution in situ and rapidly decompose poorly biodegradable organics or to accelerate biodegradation of leachate plumes which contain biodegradable organics which overcomes at least some of the disadvantages of prior art.

Summary of the Invention

The present invention relates to sparging methods and apparatuses for injection of oxidizing gas in the form of small bubbles into aquifer regions to encourage in situ remediation of subsurface leachate plumes.

In particular the present invention is directed to a method of removal of volatile organic compounds in a soil formation comprises:

injecting air including a gas into the soil formation at concentrations to effect removal of volatile organic compounds, characterised in that said gas is ozone and the air including ozone is injected into ground water of a sub surface

2

aquifer as fine bubbles with an initial bubble size in a range of about 5 to 200 µm, said ozone reacting with said volatile organic compounds.

The present invention further provides an apparatus for injection of a gas into aquifer regions for removal of organic compounds by reaction with ozone, comprising:

a gas generator for generating an oxidizing agent comprising ozone for injection of air including ozone into the aquifer;
a casing;
a packer disposed through the casing;
an air injection passageway through the packer and the casing and coupled to the gas generator;
a pump disposed through the casing and having an inlet above the packer and an outlet below the packer; and
a microporous diffuser coupled to the gas generator, said microporous diffuser including a body having a porous portion with a pore size in the range of about 5-200 µm.

The hereinafter described embodiments relate in particular to sparging methods and apparatuses for employing microporous diffusers for injecting micro-fine bubbles containing encapsulated gas bubbles into aquifer regions to encourage biodegradation of leachate plumes which contain biodegradable organics, or Criegee decomposition of leachate plumes containing dissolved chlorinated hydrocarbons. The sparging methods of the hereinafter described embodiment using microporous diffusers for injecting an encapsulated multi-gas oxidizing agent are particularly useful in that the method promotes extremely efficient removal of poorly biodegradable organics, particularly dissolved chlorinated solvents, without vacuum extraction of undesirable by-products of remediation and wherein remediation occurs by employing encapsulated multi-gas oxidizing agent for destroying organic and hydrocarbon material in place with without release of contaminating vapors.

Unlike the prior art, the contaminated groundwater is injected with an air/ozone mixture wherein micro-fine air bubbles strip the solvents from the groundwater and the encapsulated ozone acts as an oxidizing agent in a gas/gas reaction to break down the contaminates into carbon dioxide, very dilute HCL and water. This process is known as the C-Sparge process.

The unique and efficiency of the gas/gas reaction of the present method employing micro-fine bubbles for simultaneous extraction/decomposition is described hereinafter. Generally, the rate of removal in the monitoring well is about double that in the formation, mimicking the tendency for flow through a monitoring well to be about double that of the formation based on hydraulic conductivity contrasts (Wheatcraft, 1985). Note that the removal rate is fastest with PCE, next TCE, and finally DCE as expected with the gas/gas reaction. The slope of the differences between 1.5m (5 ft.) distance and 10.6m (35 ft.) distances are similar, although start and end concentrations vary.

The uniqueness and efficiency of the change to gas/gas reactions of the Creigee Mechanism (first noted in 1950), in combination with micro-fine bubble in-situ stripping cannot be understated. Current literature (Masten and Hoigne, 1992) shows a poor rate of reaction of ozone with PCE when only aqueous reactions dominate. Masten (1990) found that only a 40% reduction of PCE occurred, compared with 100% reduction of DCE, when the two compounds were exposed to aqueous solutions treated with 20-25 mg/l ozone. Preferential rates of decomposition favored PCE, followed by TCE, then by DCE. The microencagsulated ozone sparging process, using the Creigee Mechanism, C-Sparging, creates a unique reaction ideally suited to rapid removal of PCE, which has heretofore been difficult to attain.

The reaction sequence involves formation of a malozonide followed by an azonide which decomposes almost instantaneously to HCL, $CO_2$ and water when the azonide is hydrated.

Saturated compounds, like TCA (trichioroethane) or rates of reaction DCE (dichloroethane) may be decomposed, but at much slower rates since no double bond is available for reaction by the Creigee Mechanism. PCE> TCE> DCE> vinyl chloride>, TCA> DCA.

The rate of decomposition can be obtained from the observed rate of decay, solving the first order exponential decay function.

POE removal rate C-Coe -.138t for 1.5 m (5 ft.) distance, C=Coe - .092 for the rate of decay at the 10.6m (35 ft.) distance, using headspace analysis.

RATES OF DECAY (as exponential of t) from groundwater samples 1.5m (5 ft.) Well 10.6m (35 ft.) Well 1.5m (5 ft.) Well 10.6m (35 ft.) Well

| | Laboratory Analyses (Formation Water) | | Headspace Analyses (Well Water Samples) | |
|---|---|---|---|---|
| PCE | -.060t | - | .138 | -.092 |

(continued)

|  | Laboratory Analyses (Formation Water) | | Headspace Analyses (Well Water Samples) | |
|---|---|---|---|---|
| TCE | -.050 | - | -.092 | -.087 |
| DCE | -.035 | - | -.077 | -.069 |

Generally, the rate of removal in the monitoring well is about double that in the formation, mimicking the tendency for flow through a monitoring well to be about double that of the formation based on hydraulic conductivity contrast (Weatcraft, 1985). Note that the removal rate is fastest with PCE, next TCE, and finally DCE as expected with the gas/gas reaction. The slope of the difference between 1.5m (5 ft.) distance and 10.6 (35 ft.) distances are similar, although start and end concentrations vary.

The use of microporous Spargepoints[t] to create fine bubbles, which easily penetrate sandy formations to allow fluid flow, has unexpected benefits when used with multiple gas systems. Micro-fine bubbles accelerate the transfer rate of PCE from aqueous to gaseous state. The bubble rise transfers the PCE to the vadose zone. The ten-fold difference in surface-to-volume ratio of Spargepoint[tm] micro-fine bubbles compared to bubbles from well screens results in a four-fold improvement in transfer rates. To block the gaseous state from reverting to surface dissolved state in the vadose (unsaturated) zone, a microprocessor system shuttles an oxidizing gas through the vadose zone to chemically degrade the transported PCE.

**Gaseous Exchange**

If gaseous exchange is proportional to available surface area, with partial pressures and mixtures of volatile gases being held constant, a halving of the radius of bubbles would quadruple (i.e. 4x) the exchange rate. If, in the best case, a standard well screen creates air bubbles the size of a medium sand porosity, a microporous diffuser of 20 μm size creates a bubble one tenth (1/10) the diameter and then times the volume/surface ratio.

TABLE 2

| Diameter (μm) | Surface Area. $4 r^2$) | Volume ($4/3 r^3$) | Surface Area/Volume |
|---|---|---|---|
| 200 | 124600 | 4186666 | .03 |
| 20 | 1256 | 4186 | .3 |

Theoretically, the microporous bubbles exhibit an exchange rate of ten times the rate of a comparable bubble from a standard ten slot well screen.

**PARTITIONING ENHANCEMENT**

Soil Vapor concentrations are related to two governing systems: water phase and (non-aqueous) product phase. Henry's and Raoult's Laws (DiGiulio, 1990) are commonly used to understand equilibrium-vapor concentrations governing volatization from liquids. When soils are moist, the relative volatility is dependent upon Henry's Law. Under normal conditions (free from product) where volatile organic carbons (VOC's) are relatively low, an equilibrium of soil, water, and air is assumed to exist. The compound, tetrachloroethane (PCE), has a high exchange coefficient with a high vapor pressure (atm) and low aqueous solubility (umole/l). By enhancing the exchange capacity at least ten fold, the rate of removal should be accelerated substantially.

Ozone is an effective oxidant used for the breakdown of organic compounds in water treatment. The major problem in effectiveness is a short lifetime. If ozone is mixed with sewage-containing water above-ground, the half-life is normally minutes.

However, if maintained in the gaseous form, the half-life of ozone can be extended to a half hour. Using the micro-fine bubbles as extracting agents, pulling chlorinated solvents out of the dissolved state into the gaseous form as they enter the bubbles ozone. The small bubbles high surface to volume ratio accelerates a) the exchange area and b) the consumption of HVOC within the bubble maximizes the ($C_s$-C) term. In reality the rate-limiting process is the area-specific diffusion (dominated by Henry's Constant), while the decomposition reaction occurs rapidly (assuming sufficient ozone).

Ozone reacts quickly and quantitatively with PCE to yield breakdown products of hydrochloric acid, carbon dioxide, and water.

To offset the short life span, the ozone could be injected with microporous diffusers, enhancing the selectiveness of action of the ozone. By encapsulating the ozone in fine bubbles, the bubbles would preferentially extract volatile compounds like PCE from the mixtures of soluble organic compounds they encountered. The ozone destruction of organics would then target volatile organics selectively pulled into the fine air bubbles. Even in a groundwater mixture of high organic content like diluted sewage, PCE removal could be rapid.

The unique combination of micro-fine bubble extraction and ozone degradation can be generalized to predict the volatile organic compounds amenable to rapid removal. The efficiency of extraction is directly proportional to Henry's Constant which serves as a diffusion coefficient for gaseous exchange (Kg).

In wastewater treatment the two-film theory of gas transfer (Metcalf and Eddy, Inc, 1991) states the rate of transfer between gas and liquid phases is generally proportional to the surface area of contact and the difference between the existing concentration and the equilibrium concentration of the gas in solution. Simply stated, if we increase the surface to volume ration of contact, we increase the rate of exchange. If we consume the gas (VOC) entering the bubble (or micropore space bounded by a liquid film), the difference is maintained at a higher entry rate than if the VOC is allowed to reach saturation equilibrium. In our case, of the HVOC, PCE, the consumptive gas/gas reaction of PCE to by products of HCl, $CO_2$, and $H_2O$ accomplishes this.

The normal equation for the two-film theory of gas transfer is stated: (Metcalf and Eddy, 1991)

$$Vm = Kg\ A\ (C_s - C)$$

where:

Vm = rate of mass transfer
Kg = coefficient of diffusion for gas
A = area through which gas is diffusing
$C_s$ = saturation concentration of gas in solution
C = concentration of gas in solution the restatement of the equation to consider the inward transfer of phase change from dissolved HVOC to gaseous HVOC in the inside of the bubble would be:

$C_s$ = saturation concentration of gas phase in bubble
C = initial concentration of gas phase in bubble volume

Table 3 gives the Henry's Constants (Hc) for a selected number of organic compounds and the second rate constants (Rc) for the ozone radical rate of reaction. The third column presents the product of both (RRC). As a ranking of effectiveness. In actual practice the diffusion is rate-limiting, resulting in the most effective removal with PCE (tetrachloroethylene).

TABLE 3

| REMOVAL RATE COEFFICIENTS FOR THE Micro-fineBubble/OZONE PROCESS - C-SPARGE | | | |
|---|---|---|---|
| Organic Compound | Ozone $K_2$ Second order Rate Constant[b]$(M^{-1}\ SEC^{-1})$ | Hc Henry's Constant[b] | Rate Removal Coefficient |
| Benzene | 2 | $5.59 \times 10^{-3}$ | .0110 |
| Toluene | 14 | $6.37 \times 10^{-3}$ | .0890 |
| Chlorobenzene | 0.75 | $3.72 \times 10^{-3}$ | .0028 |
| Trichloroethylene | 17 | $9.10 \times 10^{-3}$ | .1540 |
| Tetrachloroethylene | 0.1 | $2.59 \times 10^{-2}$ | .026 |
| Ethanol | .02 | $4.48 \times 10^{-5}$ | .0000008 |

$R_c\ .H_c = RRC$
a. From Hoigne and Bader, 1983
b. From EPA 540/1-86/060, Superfund Public Health Evaluation Manual

## ELIMINATION OF THE NEED FOR VAPOR EXTRACTION

The need for vapor control exists when vapors of VOC's partitioned from dissolved form into the micro-fine bubbles, reach the unsaturated zone, releasing vapors. Without reaction with a decomposing gas, such as ozone, a large mass can be transmitted in a short time, creating potential health problems near residential basement areas.

The combined extraction/decomposition process has the capacity to eliminate the need for vapor capture. If the decomposition rate with ozone exceeds the vertical time-of-travel, vapors will not be produced or their concentration will be so low as to not require capture. By controlling the size of micro-fine bubbles and matching them to suitable slow rise times, the need for vapor control is eliminated.

The rise time of bubbles of different sizes was computed for water, giving the upwards gravitational velocity. The upwards velocity provides the positive pressure to push the bubbles through the porous media, following Darcy's equation. By timing the rise rate in the field; the rise time, proportional to upwards pressure, can be calculated. The bubble size is very important. Once a bubble exceeds the pore cavity size, it is significantly retarded or trapped. Pulsing of the water phase provides a necessary boost to assure steady upwards migration and reducing coalesion.

| UPWARD BUBBLE DIAMETER | TIME (MINUTES) FOR VELOCITY IN WATER | UPWARDS MIGRATION (3 METERS) (Coarse Sand and Gravel) |
|---|---|---|
| 10mm | .25 m/s | 19 min |
| 2mm | .16 m/s | 30 min |
| .2mm | .018 m/ s | 240 min |

ELIMINATION RATE OF PCE RELATIVE TO OZONE CONTENT

The reaction of ozone with tetrachloroethane (PCE) will produce degradation products of hydrochloric acid, carbon dioxide, and water. By adjusting the ozone concentration to match the dissolved PCE level, the PCE can be removed rapidly without excess ozone release to the air or release of PCE vapor into the unsaturated zone.

Accordingly, the object and purpose of the present invention is to provide microporous diffusers for removal of contaminants from soil and associated subsurface ground water aquifer, without requiring applying a vacuum for extraction biodegration by-products.

A further object is to provide that remediation occurs by destroying organic and. hydrocarbon material in place without release of contaminating vapors to the atmosphere.

The invention will be described for the purposes of illustration only in connection with certain embodiments; however, it is recognized that those persons skilled in the art may make various changes, modifications, improvements and additions on the illustrated embodiments,

Brigf Description of the Drawings

Figure 1. is a cross sectional schematic illustration of a soil formation showing the methods and apparatus of the present invention.

Figure 2. is shows an enlarged piping schematic of the present invention of Figure 1 showing the unique fine bubble production chamber;

Figure 3 is an electrical schematic for a 3 well system (Model 3503 or 3603) of the present invention of Fig. 1;

Figure 4 shows an internal layout of the Control Module box for a three well system (M-3503 or M- 3603) of the present invention o Fig. 1;

Figure 5A shows the geometry of the bottom panel on the Control Module identifying the external connections and ports for three well units (M-3503 & 3603)of the invention of Fig. 1

Figure 5B is the left side view of Fig. 5A;

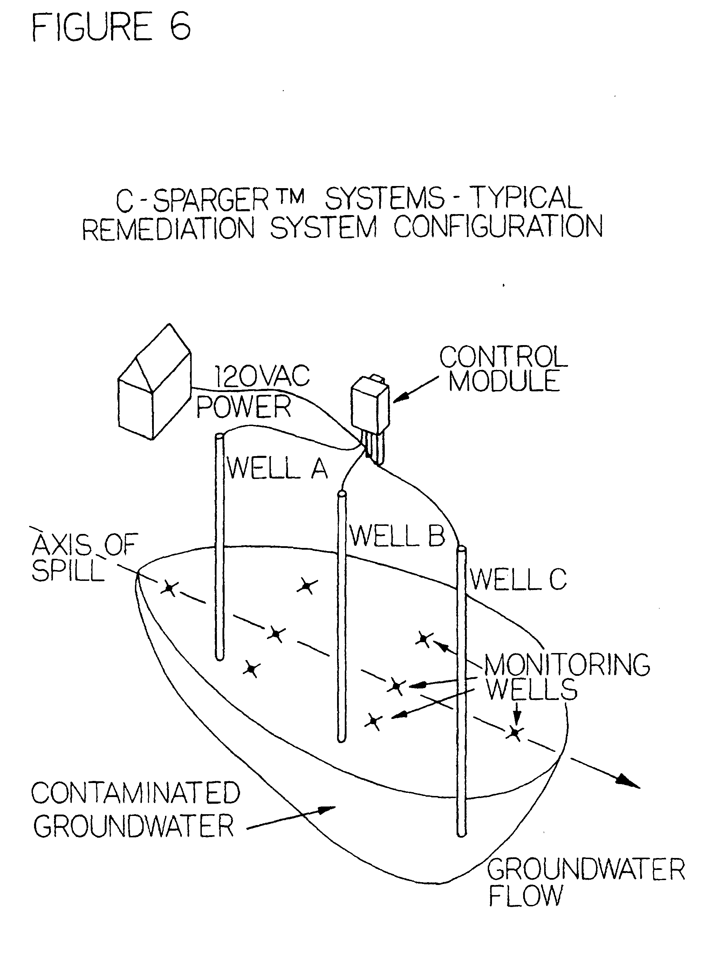

Figure 6. is 1 schematic illustration of a soil formation showing the method for of the present invention; and

Figure 7. is an alternate embodiment of a microporous spargepoint assembly of the invention of Fig. 1

DETAILED DESCRIPTION OF THE PREFERRED EMBODIMENT

The present invention is directed to sparging method for injection of oxidizing gas in the form of small bubbles into aquifer regions to encourage in situ remediation of subsurface leachate plumes. In particular the present invention employs microporous diffusers injecting micro-fine bubbles containing encapsulated gas bubbles into aquifer regions to encourage biodegradation of leachate plumes which contain biodegradable organics, or Criegee decomposition of leachate plumes containing dissolved chlorinated hydrocarbons. The present invention accomplishes this by employing microporous diffusers injecting multi-gas bubbles containing an ozone oxidizing agent into aquifer regions to insitu strip and rapidly decompose poorly biodegradable organics or to accelerate biodegradation of leachate plumes which contain biodegradable organics which overcomes at least some of the disadvantages of prior art.

The methods of the present invention employs apparatuses consisting of a sparging system, C-Sparger system (tm) is directed to low-cost removal of dissolved chlorinated hydrocarbon solvents such as perc from contaminated soil and groundwater aquifers. The C-Sparger(tm) system employs microporous diffusers, hereinafter Sparge Points (R) for producing micro-fine bubbles containing an oxidizing agent that decomposes chlorinated hydrocarbons into harmless byproducts. The C-Sparger (tm) also incorporates pumps means for pumping the an multi-gas oxidizing mixture through the Spargepoint(r) into groundwater in a soil formation. A fine bubble production chamber which uses a microporous point to generate bubbles of differing size, a timer to delay pumping until large bubbles have segregated from small bubbles by rise time, and a pump which forces the fine bubbles and liquid out into the formation. The pump means intermittently agitates the water in the well in which the C-Sparger is installed which is effective to disturb the normal inverted cone-shaped path of the bubbles injected by the Sparge point through the soil formation and disperses them in a random manner, ensuring improved contact between the oxidizing agent (contained in each bubble) by stripping the pollutant from solution in the water into the mini-atmosphere contained in each bubble. The pulsing action promotes movement of the bubbles through the porous formation. It is the insitu stripping action and maintenance of low solvent gas concentration in the bubbles which increases the efficacy and speed (and resulting cost) of remediation of a site.

In the present invention the microporous diffusers and encapsulated multi-gas oxidizing agent comprises oxidizing gas encapsulated in micro-bubbles generated from microporous diffusers matched to soil porosity. A unique bubble size range is matched to underground formation porosity and achieves dual properties of fluid like transmission and rapid extraction of selected volatile gases, said size being so selected so as to not to be so small as to lose vertical mobility. In order to accomplish a proper matching, a prior site evaluation test procedure is devised to test effectiveness of fluid transmission at the site to be remediated.

The advantage of controlled selection of small bubble size promotes rapid extraction of selected volatile organic compounds, such as PCE, TCE, or DCE with an exceptionally high surface to gas volume ratio. The dual capacity of the small bubble production pulsed injection and rise time is matched to the short lifetime of an oxidative gas, such as ozone to allow rapid dispersion into predominantly water-saturated geological formations, and extraction and rapid decomposition of the volatile organic material. The unique method for of the present invention provides for extraction efficiency with resulting economy of operation by maximizing contact with oxidant by selective rapid extraction providing for optimum fluidity to permit bubbles to move like a fluid through media which can be monitored.

The use of microporous sparging points provides a more even distribution of air into a saturated formation than the use of pressurized wells. A sparge system installed to remediate contaminated groundwater is made more cost-effective by sparging different parts of the plume area at sequenced times. Through the proper placement of sparge locations and sequence control, any possible off-site migration of floating product is eliminated. With closely spaced sparge points, water mounding is used to advantage in preventing any off-site escape of contaminant. The mounding is used to herd floating product toward extraction sites. In the present invention,the microporous diffusers and encapsulated multi-gas oxidizing agent, hereinafter referred to as C-Sparger TM Systems are designed to remove dissolved organics and solvents (chlorinated hydrocarbons) such as PCE, TCE, and DCE from contaminated groundwater. The micro-fine bubbles produced by the Spargepoint(r)s contain oxygen and ozone which oxidize the chlorinated hydrocarbons to harmless gases and weak acids. High initial concentrations of these dissolved organics have been, under (some specific-circumstances, reduced to levels of 1 ppb or less in periods of a few weeks. None of the models to date are designed for explosive environments.

The present invention employs a plurality of configurations consisting of Series 3500 and Series 3600 C-Sparge models. The 3600 Series is larger and has more capacity. Specifically, the 3600 Series has a better compressor rated for continuous use, a larger ozone generator, a second spargepoint below the first in each well, and larger diameter gas tubing. Both model series have control units that can support: one (Models 3501 and 3601), two (Models 3502 and 3602) and three separate wells (Models 3503 and 3603). The differences between the one, two, and three well models are in the numbers of relays, internal piping, external ports and programming of the timer/controller.

Normal operation for C-Sparger TM systems includes carrying out, in series for each well, the following functions on a timed basis: pumping air and ozone through Spargepoint(r)s into the soil formation, pumping aerated/ozonated water in the well into-the soils and recovering treated water above. Treatment is followed by a programmable period of no external treatment and multiple wells are sequenced in turn. Agitation with pumped water disturbs the usually inverted cone-shaped path of bubbles through the soils and disperses them much more widely. This increases contact and greatly improves efficiency and speed of remediation. Vapor capture is not normally necessary.

Series 3500 and 3600 systems include a control Module (Box), one to three well assemblies depending on specific model selected, a 30 m (1-00 ft) submersible pump power-gas line for each well, a flow meter (to check spargepoint flow rates). Model Series 3500 and 3600 Control Modules have been successfully deployed outdoors in benign and moderate environments for prolonged periods of time. The Control Module must be firmly mounted vertically on 4 x 4 posts or a building wall near the wells.

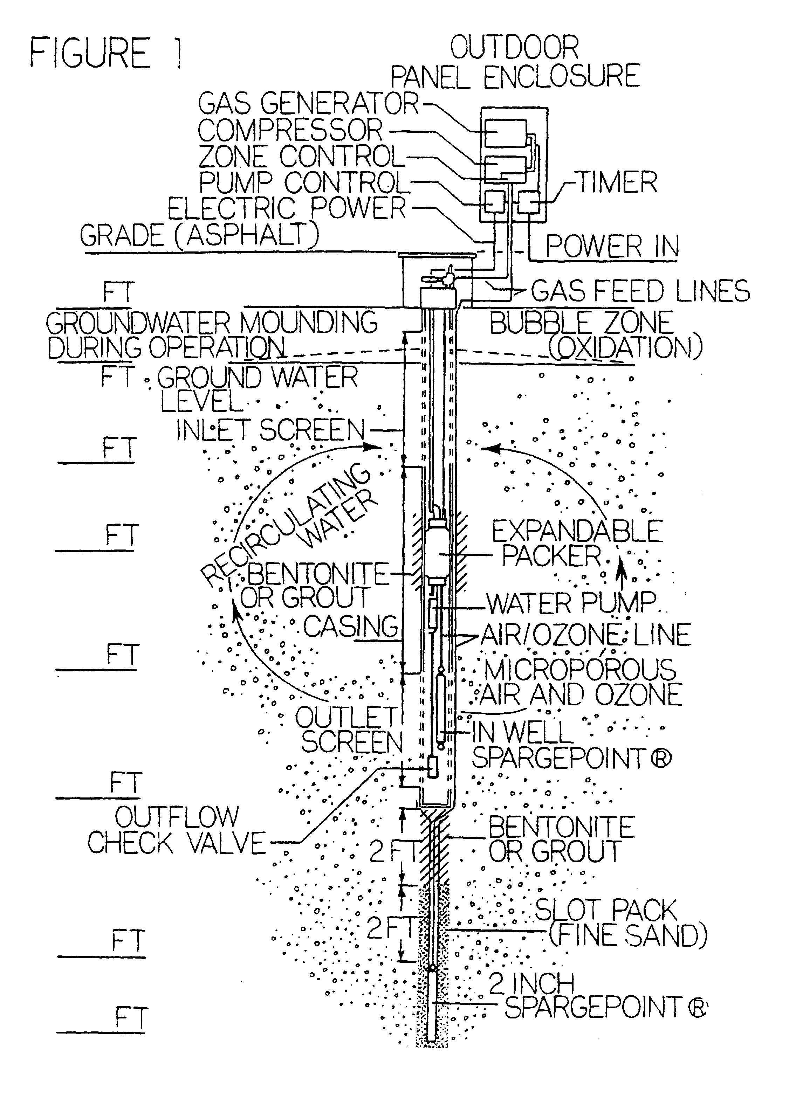

The actual placement depths, separations, number/size of wells and overall remediation system geometry are highly variable. Differences in specific pollutant, spill, soil, groundwater and climate characteristics can greatly influence the design and geometry of the overall remediation system. Monitoring wells are usually also needed. In short, specific circumstances and conditions are often critical, however, a generic or typical overall system is shown on Figure 1.

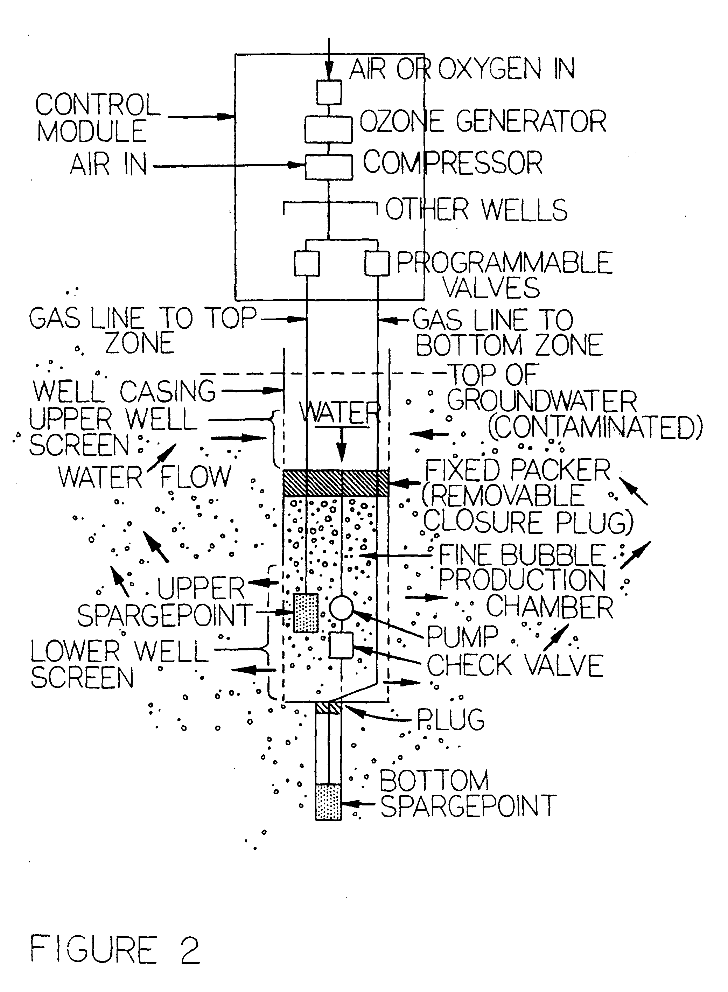

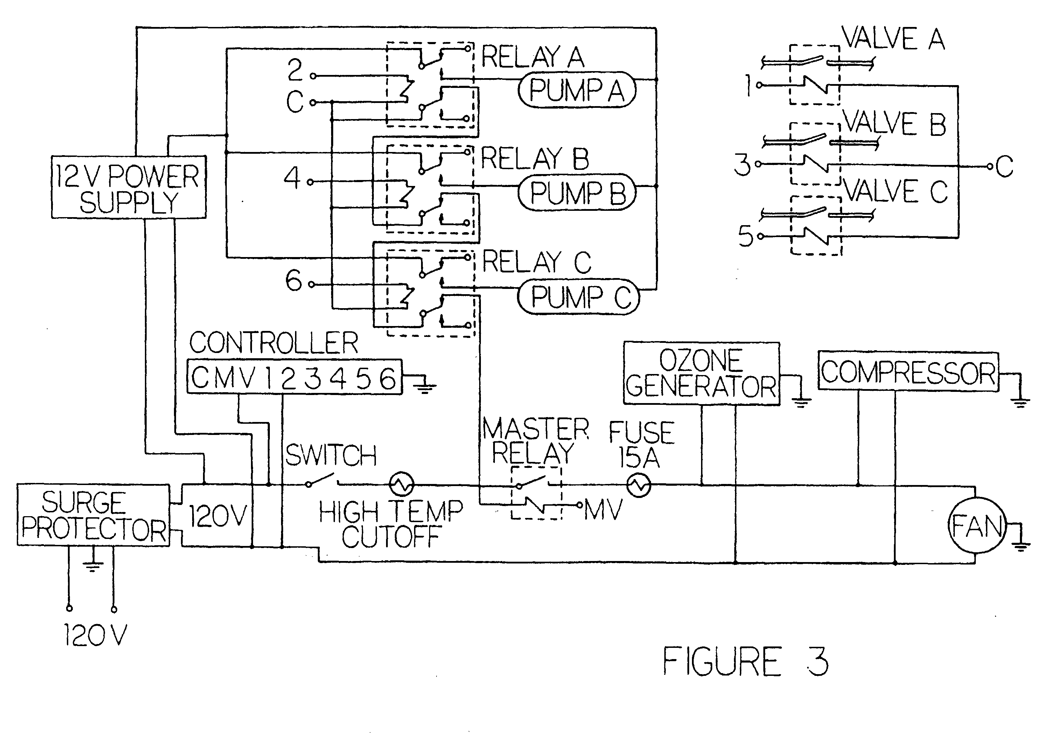

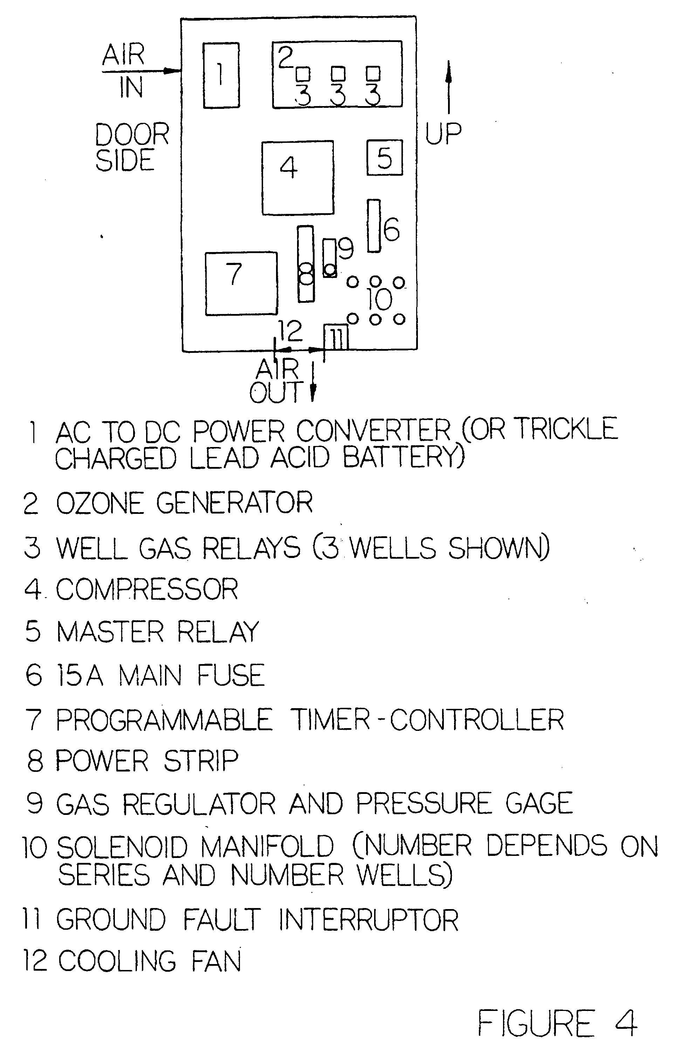

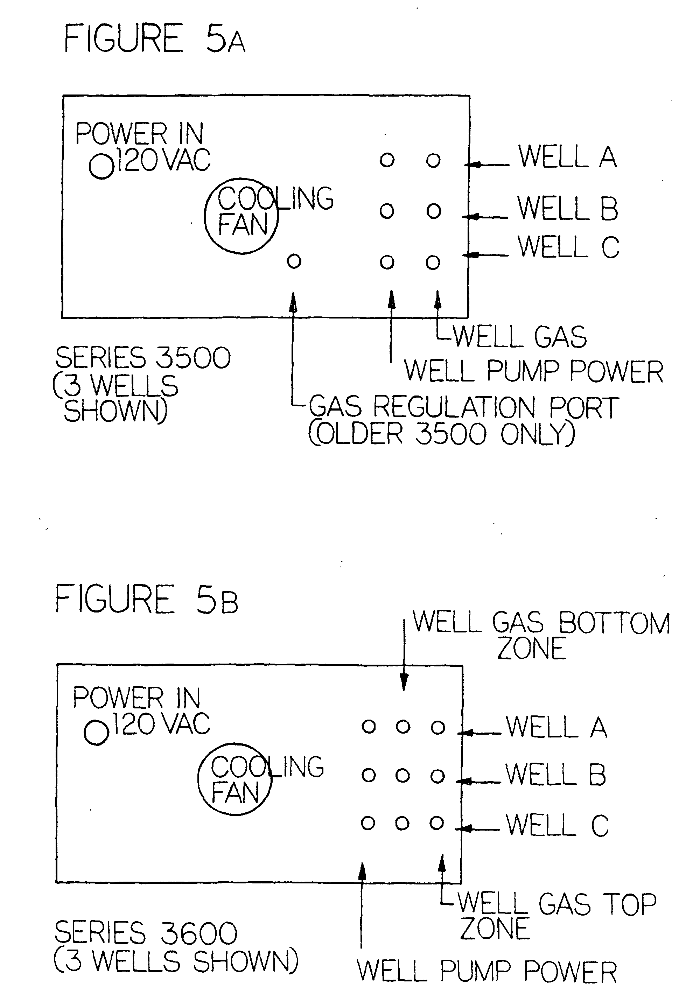

Figure 1 shows a cross sectional schematic illustration of a soil formation showing the methods and apparatuses of the present invention Figure 2 shows a piping schematic and Figure 3 an electrical schematic for a 3 well system (Model 3503 or 3603). Current production 3500 and 3600 Series models have an internal Ground Fault Interrupter and surge buffers incorporated into various electrical components. Figure 4 shows an internal layout of the Control Module box for a three well system (M-3503 or M- 3603). Figure 5 shows the geometry of the bottom panel on the Control Module identifying the external connections and ports for three well units (M-3503 and 3603). Table I provides the basic specification for the Series 3500 and 3600 systems. The drawing shows a single well system Series 3600 ( M-3601). The Series 3500 does not have the lower Spargepoint(r) Multiple well models (3502, 3503, 3602 and 3603) just replicate the well units using a single Control Module.

It is well recognized that the effectiveness of treatment is dependent upon uniformity of dispersion of the gas as it travels through the formation. A porous structure with appropriate packing matches the condition of the pores of the soil with thirty percent (30%) pore distribution. The dispersion of bubbles as a fluid can be checked with Darcy's equation.

The use of microporous materials in the "Spargepoint(r)$^{tm}$" 26 to inject gases into groundwater saturated formations has special advantages for the following reasons:

1. Matching permeability and channel size;
2. Matching porosity;
3. Enhancing fluidity, which can be determined in-situ.

The most effective range of pore space for the diffuser material selected depends upon the nature of the unconsolidated formation to be injected into, but the following serves as a general guide:

1. Porosity of porous material: thirty percent (30%);
2. Pore space: 5-200 μm;

    a. 5-20 very fine silty sand;
    b. 20-50 medium sand;
    c. 50-200 coarse sand and gravel.

The surrounding sand pack placed between the spargepoint 26 and natural material to fill the zone of drilling excavation should also be compatible in channel size to reduce coalescing of the produced bubbles.

The permeability range for fluid injection function without fracturing would follow:

1. $10^{-2}$ to $10^{-6}$ cm/sec, corresponding to 2 to 2000 Darcy's; or
2. $20^{-2}$ to $10^{-6}$ cm/sec; or
3. 30-0.003 m/day (100 to .01 ft/day) hydraulic conductivity.

Permeability is the measure of the ease of movement of a gas through the soil. The ability of a porous soil to pass any fluid, including gas, depends upon its internal resistance to .low, dictated largely by the forces of attraction, adhesion, cohesion, and viscosity. Because the ratio of surface area to porosity increases as particle size decreases, permeability is often related to particle size see.

### EQUIPMENT

Referring to the figures there is shown a C-Sparge unit consisting of a microporous diffuser(s) in combination with encapsulated multi-gas oxidizing agent 10, the system 10 consists of a master unit 12 and one or more in-well sparging units 14. Each master unit 12 can operate up to a total of three wells simultaneously, and treating an area up to 15 m (50 feet) wide and 30 m (100 feet) long. Actual performance depends upon site conditions. Vapor capture is not normally necessary. In the preferred embodiment as shown in Fig 1 master unit 12 consists of the following: a gas generator 16, a compressor 18, a pump control 20, a timer 22, gas feed lines 15, and a power source 19. The master unit 12 must be firmly mounted on 4 x 4 posts 40 or building wall 42 near the wells. A heavy-duty power cable 44, not over 15 m (50 feet) in length, may be used to run from the power source to the master unit 12.

Referring to Figs. the in-well sparging unit 14 consists of the following: fixed packer 24, diffuser hereinafter "Spargepoint(r)$^{tm}$" 26, water pump 28, air/ozone line 30, check valve 32, and fittings 34. Referring to the drawing there is shown the "Spargepoint(r)(r)$^{tm}$" 26, which employs a microporous diffuser in place of standard slotted well screen to improve bubble dispersion through soil and improve rate of gaseous exchange. A normal 10-slot PVC well screen contains roughly twelve percent (12%) open area. Under pressure most air exits the top slits and radiates outward in a starlike fracture pattern, evidencing fracturing of the formation.

Spargepoints include several unique configurations as follows;

a. Direct substitute for well screen, 30% porosity 5-50 μm channel size resistance to flow only 7-20 kPa (1 to 3 PSI), can take high volume flow, needs selective annular pack (sized to formation). High density polyethylene or polypropylene is light weight,rugged, inexpensive.

b. Diffuser on end of narrow diameter pipe riser KVA 14-291. This reduces the residence time in the riser volume.

c. Shielded microporous diffuser which is injected with a hand-held or hydraulic vibratory hammer. The microporous material is molded around an internal metal (copper) perforated tubing and attached to an anchor which pulls the spargepoint out when the protective insertion shaft is retracted. Unit is connected to surface with 4.80 or 6.4 mm (3/16 or 1/4 inch) polypropylene tubing with a compression fitting.

d. Thin spargepoint with molded tubing can be inserted down narrow shaft for use with push or vibratory tools with detachable points. The shaft is pushed to the depth desired, then the spargepoint inserted, the shaft is pulled upwards, pulling off the detachable drive point and exposing the spargepoint.

e. Microporous diffuser/pump combination placed within a well screen in such a manner that bubble production and pumping is sequenced with a delay to allow separation of large bubbles from the desired fine "champagne" bubbles. The pressure from the pump is allowed to offset the formation back pressure to allow injection of the remaining fine bubbles into the formation.

## IMPROVEMENTS

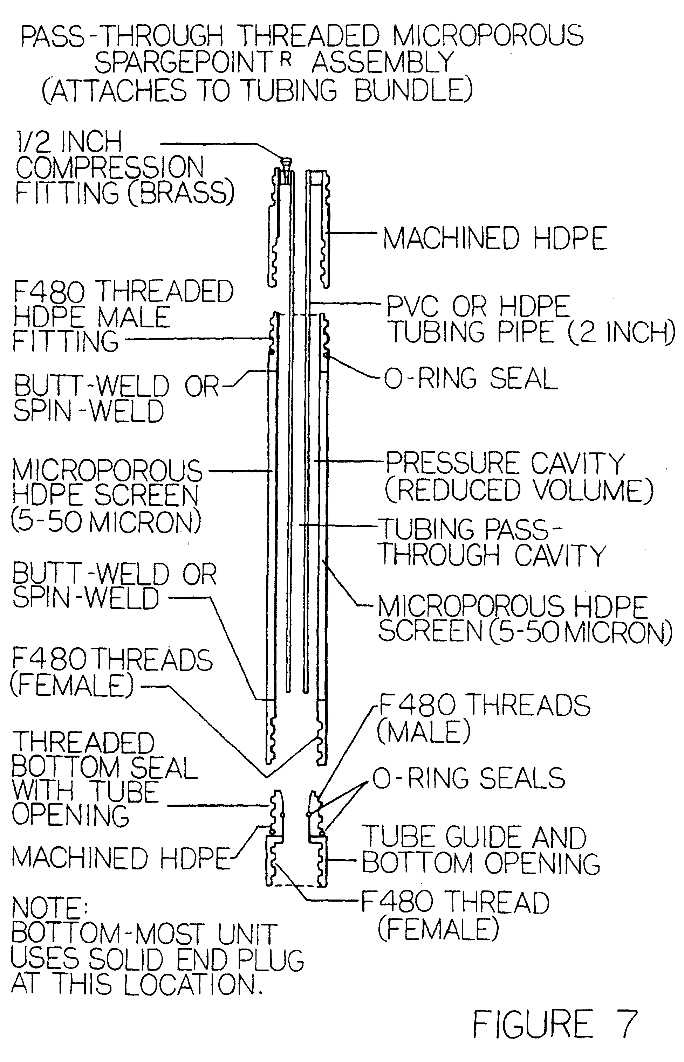

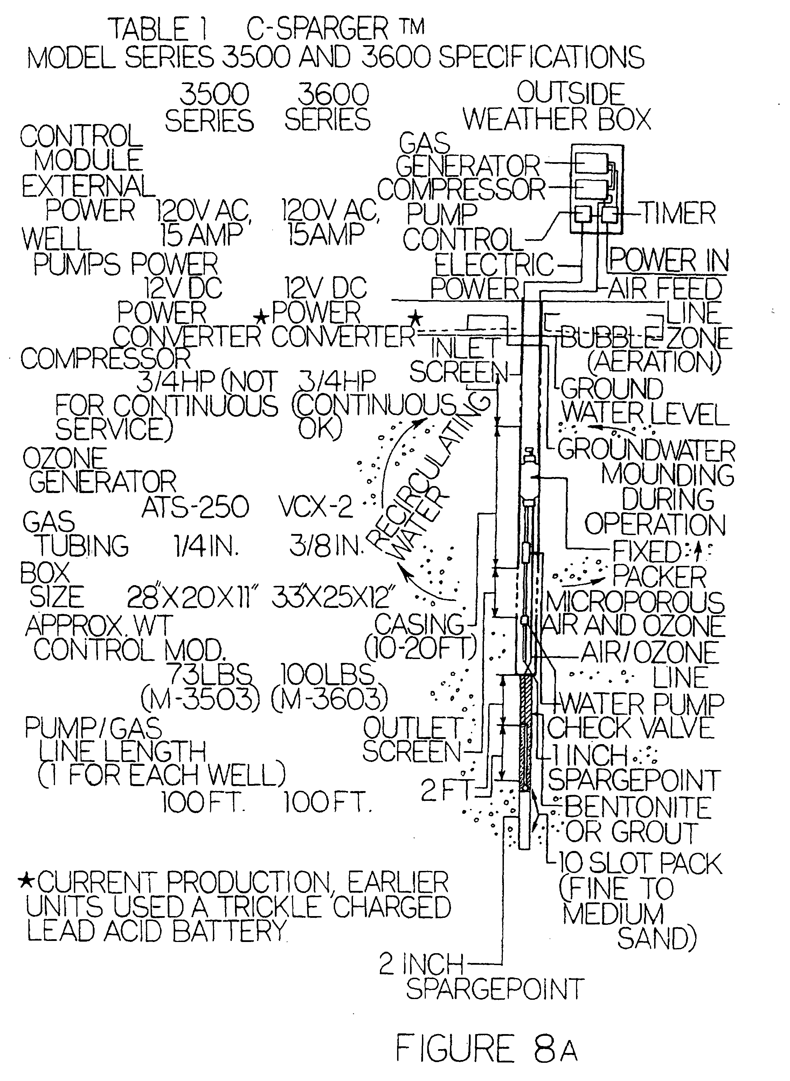

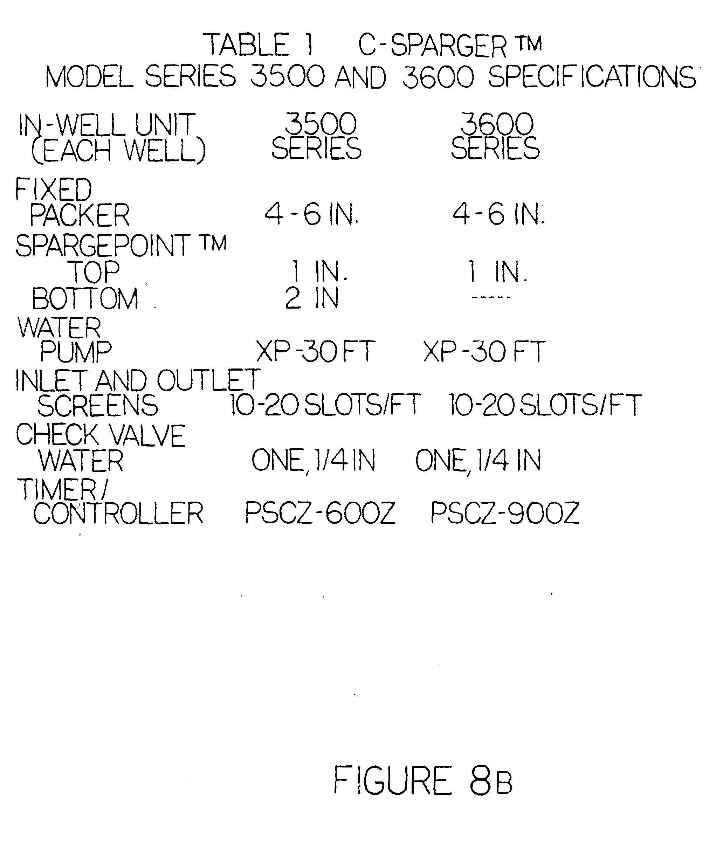

In the present invention the improvement comprises several new equipment designs associated with the spargepoints. Most important is the submittal for HDPE porous material with well fittings and pass-through design which allows individual pressure and flow control as is shown in Fig. 7.

Secondarily, the push-probe points have been developed for use with pneumatic tools, instead of drilling auger insertion on controls, the right-angle mirror wellhead assembly needs better protection.

Improvements on C-sparger/microporous spargepoint. One of the major pass-through spargepoints problems in horizontal sparging is even distribution of air bubbles. If inflow is attached to the end of a screen, the pressure drops continuously as air is released from the screen. The resulting distribution of flow causes most bubbles to be produced where the connection occurs with flow alternating outwards. The end of the screen products little or no bubbles.

To allow even distribution of bubbles, either individual spargepoints are bundled (spagetti tube approach) or the spargepoint are constructed in a unique way which allows interval tubing connections with flow and pressure control for each spargepoint region with the proposed arrangement, connecting tubing, to spargepoints passes through the spargepoint internally without interfering with function of producing small bubbles on a smooth external surface (2) the tubing penetration reducing the internal gas volume of the spargepoint, thereby reducing residence time for oxidative gases (important since ozone has only a certain lifetime before decomposition), and allows 3 to 4 spargepoints to be operated simultaneously with equal flow and pressure. Each spargepoint can also be programmed to pulse on a timed sequencer, saving electrical costs and allowing certain unique vertical and horizontal bubble patterns. Spargepoints can be fitted with F480 Thread with internal bypass and compression fittings:

Advantages

(2) fits standars well screen;
(3) Allows individual flow/pressure control;
(4) Reduces residence time;
(5) Allows casing/sparge instead of continuous bubbler.

Use of Injectable Points configured as Moulded: 450 mm (18 Inch) 10 mm (.40 inch) HDPE moulded into 4.8 mm (1/4 inch)pp tubing or HDPE tubing allows smooth tube to be inserted into push probe with detachable point. Use of"Bullet" prepacked Spargepoints : with KVA "hefty system" prepacked sand cylinder and bentonite cylinder placed over tubing and porous point. Also use of a porous point reinforced with inner metal tube (perforated) to allow strength throughout tubing resists disintegration of plastic during insertion.

Use of Pressure/flow headers: Rodometer/mirror: Mirror assembly for flush-mounted rotometer (flowmeter), allows reading from vertical down and controls flow off lateral lines to adjust to back pressure from varying types of formations (silt, sand, gravel) below.

**Claims**

1. A method of removal of volatile organic compounds in a soil formation comprises:

   injecting air including a gas into the soil formation at concentrations to effect removal of volatile organic compounds, **characterised in that** said gas is ozone and the air including ozone is injected into ground water of a sub surface aquifer as fine bubbles with an initial bubble size in a range of about 5 to 200 µm, said ozone reacting with said volatile organic compounds.

2. The method of claim 1 wherein the fine bubbles are sized in accordance with a porosity characteristic of the soil formation.

3. The method of claim 1 wherein injecting further comprises:

   providing a plurality of injection wells and introducing the ambient air and ozone as line bubbles between about 5 to 200 µm through the injection wells.

4. The method of claim 3, further comprising intermittently agitating water in the well.

5. The method of claim 1, further comprising periodically pulsing the injected air including ozone.

6. The method of claim 1 wherein injecting further comprises:

   mixing the ambient air with the ozone.

7. The method of claim 1 wherein injecting further comprises:

   mixing the ambient air with the ozone; and
   delivering the ambient air and ozone through a plurality of micro-porous diffusers to produce the fme bubbles of ambient air and ozone.

8. The method of claim 1 wherein volatile organic compounds in the soil formation are decomposed by ozone interaction with double bonded carbon atoms of the volatile organic compounds.

9. The method of claim 1 wherein the fine bubbles have an initial bubble size at least between 50 to 200 µm.

10. The method of claim 1 wherein the fine bubbles have an initial bubble size at least between 20 to 50 µm.

11. The method of claim 1 wherein the fine bubbles have an initial bubble size at least between 5 to 20 µm.

12. The method of claim 1 further comprising:

    providing a plurality of infection wells and injecting the ambient air and ozone as fine bubbles through the injection wells by using a cotresponding micro-porous diffuser for each one of the plurality of injection wells; surrounding the micro-porous diffusers with a sand pack disposed between the micro-porous diffusers and the surrounding soil formation.

13. The method of claim 1 wherein removal of volatile organic compounds can occur without a vapor extraction.

14. The method of claim 1 further comprising agitating with pumped water to disperse said bubbles through the soil formation.

15. The method of claim 1 wherein the soil formation contains chlorinated hydrocarbons.

16. The method of claim 1 wherein the soil formation contains organic and hydrocarbon material.

17. The method of claim 1 wherein the volatile organic compounds include chlorinated solvents including dichloroethene, trichloroethene, and/or tetrachloroethene.

18. The method of claim 1 wherein micro-porous diffusers are used to generate said fine bubbles and the micro-porous materials of the micro-porous diffusers have a pore size selected to match a porosity characteristic of the surrounding soil formation.

19. The method of claim 18 wherein the micro-porous materials of the micro-porous diffusers have a pore size selected to match a porosity characteristic and a permeability characteristic of the surrounding soil formation.

20. The method of claim 1 wherein micro-porous diffusers are used to generate said fine bubbles and the micro-porous materials of the micro-porous diffusers have a pore size selected to match a permeability characteristic of the surrounding soil formation.

21. The method of claim 1 further comprises:

    generating an oxidising agent comprising ozone at concentrations to effect removal of contaminants;
    mixing ambient air with ozone to produce the air including ozone.

22. Apparatus for injection of a gas into aquifer regions for removal of volatile organic compounds by reaction with ozone, comprising:

    a gas generator for generating an oxidizing agent comprising ozone for injection of air including ozone into the aquifer;
    a casing;
    a packer disposed through the casing;
    an air injection passageway through the packer and the casing and coupled to the gas generator;
    a pump disposed through the casing and having an inlet above the packer and an outlet below the packer; and
    a microporous diffuser coupled to the gas generator, said microporous diffuser including a body having a porous portion with a pore size in the range of about 5-200 μm.

23. The apparatus of claim 22 further comprising:

    an outlet screen coupled to the casing.

24. The apparatus of claim 23 wherein the outlet screen is coupled to the casing at a lower portion thereof and with the apparatus further comprising:

    an inlet screen coupled to the casing at an upper portion of the casing.

25. The apparatus of claim 22 further comprising:

    a compressor coupled to the gas generator to provide the gas to the outlet screen and the microporous diffuser at an elevated pressure.

26. The apparatus of claim 22 wherein the microporous diffuser is disposed outside of the casing.

27. The apparatus of claim 22 wherein the microporous diffuser is disposed within the casing.

28. The apparatus of claim 22 wherein the microporous diffuser is a first microporous diffuser disposed within the casing and wherein the apparatus further comprises:

    a second microporous diffuser disposed below the casing.

29. The apparatus of claim 22 wherein the casing and apparatus is disposed within a well, the well provided on a site having an aquifer, and wherein said apparatus further comprises:

    an outlet screen disposed in the aquifer; and

an inlet screen disposed above said outlet screen.

**30.** The apparatus of claim 29, further comprising agitation means for intermittently agitating water in the well.

## Revendications

**1.** Procédé pour éliminer des composés organiques volatiles dans une formation de sol, comportant :

l'injection d'air incluant un gaz dans la formation de sol à des concentrations destinées à effectuer une élimination de composés organiques volatiles, **caractérisé en ce que** ledit gaz est de l'ozone et ledit air incluant l'ozone est injecté dans une nappe phréatique d'une couche aquifère souterraine sous forme de minuscules bulles ayant une taille initiale de bulle dans une plage d'environ 5 à 200 µm, ledit ozone réagissant avec lesdits composés organiques volatiles.

**2.** Procédé selon la revendication 1, dans lequel les minuscules bulles sont dimensionnées conformément à une caractéristique de porosité de la formation de sol.

**3.** Procédé selon la revendication 1, dans lequel l'injection comporte de plus

la fourniture d'une pluralité de puits d'injection et l'introduction de l'air ambiant et d'ozone sous forme de minuscules bulles entre environ 5 et 200 µm à travers les puits d'injection.

**4.** Procédé selon la revendication 3, comportant de plus l'agitation par intermittence d'eau dans le puits.

**5.** Procédé selon la revendication 1, comportant de plus la pulsation périodique de l'air injecté incluant de l'ozone.

**6.** Procédé selon la revendication 1, dans lequel l'injection comporte de plus :

le mélange de l'air ambiant avec l'ozone.

**7.** Procédé selon la revendication 1, dans lequel l'injection comporte de plus :

le mélange de l'air ambiant avec l'ozone, et
l'administration de l'air ambiant et de l'ozone à travers une pluralité de diffuseurs microporeux pour produire de minuscules bulles d'air ambiant et d'ozone.

**8.** Procédé selon la revendication 1, dans lequel des composés organiques volatiles dans la formation de sol sont décomposés par interaction d'ozone avec des atomes de carbone à double liaison des composés organiques volatiles.

**9.** Procédé selon la revendication 1, dans lequel les minuscules bulles ont une taille initiale de bulle comprise entre au moins 50 et 200 µm.

**10.** Procédé selon la revendication 1, dans lequel les minuscules bulles ont une taille initiale de bulle comprise entre au moins 20 et 50 µm.

**11.** Procédé selon la revendication 1, dans lequel les minuscules bulles ont une taille initiale de bulle comprise entre au moins 5 et 20 µm.

**12.** Procédé selon la revendication 1, comportant de plus les étapes consistant à :

fournir une pluralité de puits d'injection et injecter l'air ambiant et l'ozone sous forme de minuscules bulles à travers les puits d'injection en utilisant un diffuseur microporeux correspondant pour chaque puits de la pluralité de puits d'injection,
entourer les diffuseurs microporeux à l'aide d'un remblai de sable positionné entre les diffuseurs microporeux et la formation de sol environnante.

**13.** Procédé selon la revendication 1, dans lequel l'élimination des composés organiques volatiles peut avoir lieu sans extraction en phase vapeur.

**14.** Procédé selon la revendication 1, comportant de plus l'agitation à l'aide d'eau pompée pour disperser lesdites bulles à travers la formation de sol.

**15.** Procédé selon la revendication 1, dans lequel la formation de sol contient des hydrocarbures chlorés.

**16.** Procédé selon la revendication 1, dans lequel la formation de sol contient un matériau organique et hydrocarboné.

**17.** Procédé selon la revendication 1, dans lequel les composés organiques volatiles incluent des solvants chlorés incluant du dichloroéthylène, trichloroéthylène, et/ou tétrachloroéthylène.

**18.** Procédé selon la revendication 1, dans lequel les diffuseurs microporeux sont utilisés pour générer lesdites minuscules bulles et les matériaux microporeux des diffuseurs microporeux ont une taille de pore sélectionnée pour correspondre à une caractéristique de porosité de la formation de sol environnante.

**19.** Procédé selon la revendication 18, dans lequel les matériaux microporeux des diffuseurs microporeux ont une taille de pore sélectionnée pour correspondre à une caractéristique de porosité et une caractéristique de perméabilité de la formation de sol environnante.

**20.** Procédé selon la revendication 1, dans lequel des diffuseurs microporeux sont utilisés pour générer lesdites minuscules bulles et les matériaux microporeux des diffuseurs microporeux ont une taille de pore sélectionnée pour correspondre à une caractéristique de perméabilité de la formation de sol environnante.

**21.** Procédé selon la revendication 1, comportant de plus les étapes consistant à :

générer un agent oxydant comportant de l'ozone à des concentrations destinées à effectuer une élimination de contaminants,
mélanger l'air ambiant avec l'ozone pour produire l'air incluant de l'ozone.

**22.** Dispositif d'injection d'un gaz dans des régions aquifères pour l'élimination de composés organiques volatiles par réaction avec de l'ozone, comportant :

un générateur de gaz pour générer un agent oxydant comportant de l'ozone pour une injection d'air incluant de l'ozone dans la couche aquifère,
un boîtier,
un compacteur positionné à travers le boîtier,
un passage d'injection d'air à travers le compacteur et le boîtier est couplé au générateur de gaz,
une pompe positionnée à travers le boîtier ayant une entrée au-dessus du compacteur et une sortie au-dessous du compacteur, et
un diffuseur microporeux couplé au générateur de gaz, ledit diffuseur microporeux comportant un corps ayant une partie poreuse présentant une taille de pore dans la plage d'environ 5 à 200 $\mu$m.

**23.** Dispositif selon la revendication 22, comportant de plus :

un tamis de sortie couplé au boîtier.

**24.** Dispositif selon la revendication 23, dans lequel le tamis de sortie est couplé au boîtier sur une partie inférieure de celui-ci et, le dispositif comportant de plus :

un tamis d'entrée couplé au boîtier sur une partie supérieure du boîtier.

**25.** Dispositif selon la revendication 22, comportant de plus :

un compresseur couplé au générateur de gaz pour délivrer le gaz dans le tamis de sortie et le diffuseur microporeux à une pression élevée.

**26.** Dispositif selon la revendication 22, dans lequel le diffuseur microporeux est positionné à l'extérieur du boîtier.

**27.** Dispositif selon la revendication 22, dans lequel le diffuseur microporeux est positionné dans le boîtier.

**28.** Dispositif selon la revendication 22, dans lequel le diffuseur microporeux est un premier diffuseur microporeux positionné dans le boîtier et dans lequel le dispositif comporte de plus :

un second diffuseur microporeux positionné au-dessous du boîtier.

**29.** Dispositif selon la revendication 22, dans lequel le boîtier et le dispositif sont positionnés dans un puits, le puits étant agencé sur un site ayant une couche aquifère, et dans lequel ledit dispositif comporte de plus :

un tamis de sortie positionné dans la couche aquifère, et
un tamis d'entrée positionné au-dessus dudit tamis de sortie.

**30.** Dispositif selon la revendication 29, comportant de plus des moyens d'agitation pour agiter par intermittence de l'eau dans le puits.

**Patentansprüche**

**1.** Verfahren zur Entfernung flüchtiger organischer Verbindungen in einer Bodenformation umfassend das Einblasen von Luft, die ein Gas enthält, in die Bodenformation in Konzentrationen, die eine Entfernung flüchtiger organischer Verbindungen bewirken, **dadurch gekennzeichnet, dass** das Gas Ozon ist und dass die Ozon enthaltende Luft in Grundwasser einer unterirdischen wasserführenden Schicht als feine Blasen mit einer Anfangsblasengröße im Bereich von etwa 5 bis 200 μm eingeblasen wird, wobei das Ozon mit den flüchtigen organischen Verbindungen reagiert.

**2.** Verfahren gemäß Anspruch 1, worin die Größe der feinen Blasen einer Porositätscharakteristik der Bodenformation entspricht.

**3.** Verfahren gemäß Anspruch 1, worin das Einblasen ferner das Bereitstellen einer Vielzahl von Einblasbohrungen und das Einführen der Umgebungsluft und des Ozons als feine Blasen zwischen etwa 5 bis 200 μm durch die Einblasbohrungen umfasst.

**4.** Verfahren gemäß Anspruch 3, das ferner das intermittierende Bewegen von Wasser in der Bohrung umfasst.

**5.** Verfahren gemäß Anspruch 1, das ferner das periodische Pulsieren der eingeblasenen Ozon enthaltenden Luft umfasst.

**6.** Verfahren gemäß Anspruch 1, worin das Einblasen ferner das Mischen der Umgebungsluft mit dem Ozon umfasst.

**7.** Verfahren gemäß Anspruch 1, worin das Einblasen ferner umfasst:

das Mischen der Umgebungsluft mit dem Ozon und
das Fördern der Umgebungsluft und des Ozons durch eine Vielzahl von mikroporösen Luftverteilern, um feine Blasen aus Umgebungsluft und Ozon herzustellen.

**8.** Verfahren gemäß Anspruch 1, worin die flüchtigen organischen Bestandteile in der Bodenformation durch Wechselwirkung von Ozon mit Doppelbindungskohlenstoffatomen der flüchtigen organischen Verbindungen abgebaut werden.

**9.** Verfahren gemäß Anspruch 1, worin die feinen Blasen eine Anfangsblasengröße zwischen wenigstens 50 bis 200 μm aufweisen.

**10.** Verfahren gemäß Anspruch 1, worin die feinen Blasen eine Anfangsblasengröße zwischen wenigstens 20 bis 50 μm aufweisen.

11. Verfahren gemäß Anspruch 1, worin die feinen Blasen eine Anfangsblasengröße zwischen wenigstens 5 bis 20 µm aufweisen.

12. Verfahren gemäß Anspruch 1, ferner umfassend:

Bereitstellen einer Vielzahl von Einblasbohrungen und Einblasen der Umgebungsluft und des Ozons als feine Blasen durch die Einblasbohrungen, wobei für jede der Vielzahl von Einblasbohrungen ein entsprechender mikroporöser Luftverteiler verwendet wird;
Umgeben der mikroporösen Luftverteiler mit einem Sandpack, der zwischen den mikroporösen Luftverteilern und der umgebenden Bodenformation angeordnet wird.

13. Verfahren gemäß Anspruch 1, worin die Entfernung der flüchtigen organischen Verbindungen ohne Dampfextraktion stattfinden kann.

14. Verfahren gemäß Anspruch 1, das ferner das Bewegen mit gepumptem Wasser umfasst, um die Blasen in der Bodenformation zu verteilen.

15. Verfahren gemäß Anspruch 1, worin die Bodenformation chlorierte Kohlenwasserstoffe umfasst.

16. Verfahren gemäß Anspruch 1, worin die Bodenformation organisches und Kohlenwasserstoffmaterial enthält.

17. Verfahren gemäß Anspruch 1, worin die flüchtigen organischen Verbindungen chlorierte Lösungsmittel umfassen, einschließlich Dichlorethen, Trichlorethen und/oder Tetrachlorethen.

18. Verfahren gemäß Anspruch 1, worin die mikroporösen Luftverteiler zum Erzeugen der feinen Blasen eingesetzt werden und worin die mikroporösen Materialien der mikroporösen Luftverteiler eine Porengröße aufweisen, die derart ausgewählt wird, dass sie zu einer Porositätscharakteristik der umgebenden Bodenformation passt.

19. Verfahren gemäß Anspruch 18, worin die mikroporösen Materialien der mikroporösen Luftverteiler eine Porengröße aufweisen, die derart ausgewählt wird, dass sie zu einer Porositätscharakteristik und einer Permeabilitätscharakteristik der umgebenden Bodenformation passt.

20. Verfahren gemäß Anspruch 1, worin die mikroporösen Luftverteiler zum Erzeugen der feinen Blasen eingesetzt werden und worin die mikroporösen Materialien der mikroporösen Luftverteiler eine Porengröße aufweisen, die derart ausgewählt wird, dass sie zu einer Permeabilitätscharakteristik der umgebenden Bodenformation passt.

21. Verfahren gemäß Anspruch 1, ferner umfassend:

Erzeugen von einem Oxidationsmittel, das Ozon in Konzentrationen enthält, die eine Entfernung von Verunreinigungen bewirken;
Mischen der Umgebungsluft mit Ozon zur Herstellung der Ozon enthaltenden Luft.

22. Vorrichtung zum Einblasen eines Gases in wasserführende Bereiche zur Entfernung flüchtiger organischer Verbindungen durch Umsetzung mit Ozon umfassend:

einen Gasentwickler zum Erzeugen eines Oxidationsmittels, das Ozon umfasst, zum Einblasen von Ozon enthaltender Luft in den wasserführenden Bereich;
ein Gehäuse;
einen Packer, der durch das Gehäuse führt;
einen Lufteinblasdurchlass durch den Packer und das Gehäuse, der an den Gasentwickler angeschlossen ist;
eine Pumpe, die durch das Gehäuse führt und oberhalb des Packers einen Einlass und unterhalb des Packers einen Auslass aufweist, und
einen mikroporösen Luftverteiler, der an den Gasentwickler angeschlossen ist, wobei der mikroporöse Luftverteiler einen Körper enthält, der einen porösen Teil mit einer Porengröße im Bereich von etwa 5 bis 200 µm aufweist.

23. Vorrichtung gemäß Anspruch 22, die ferner ein Auslassgitter umfasst, das mit dem Gehäuse verbunden ist.

24. Vorrichtung gemäß Anspruch 23, worin das Auslassgitter mit einem unteren Teil des Gehäuses verbunden ist und wobei die Vorrichtung
ferner ein Einlassgitter umfasst, das mit einem oberen Teil des Gehäuses verbunden ist.

25. Vorrichtung gemäß Anspruch 22, die ferner einen Kompressor umfasst, der an den Gasentwickler angeschlossen ist, um unter erhöhtem Druck das Gas an das Auslassgitter und den mikroporösen Luftverteiler zu liefern.

26. Vorrichtung gemäß Anspruch 22, worin der mikroporöse Luftverteiler außerhalb des Gehäuses angeordnet ist.

27. Vorrichtung gemäß Anspruch 22, worin der mikroporöse Luftverteiler innerhalb des Gehäuses angeordnet ist.

28. Vorrichtung gemäß Anspruch 22, worin der mikroporöse Luftverteiler ein erster mikroporöser Luftverteiler ist, der innerhalb des Gehäuses angeordnet ist, und worin die Vorrichtung ferner einen zweiten mikroporösen Luftverteiler umfasst, der unterhalb des Gehäuses angeordnet ist.

29. Vorrichtung gemäß Anspruch 22, worin das Gehäuse und Vorrichtung innerhalb einer Bohrung angeordnet ist, wobei die Bohrung an einer Stelle bereitgestellt ist, die einen wasserführenden Bereich aufweist, und worin die Vorrichtung ferner umfasst:

ein Auslassgitter, das in dem wasserführenden Bereich angeordnet ist, und
ein Einlassgitter, dass über dem Auslassgitter angeordnet ist.

30. Vorrichtung gemäß Anspruch 29, die ferner Bewegungsmittel zum periodischen Bewegen von Wasser in der Bohrung umfasst.

FIGURE 1

CONTROL
MODULE
AIR IN

AIR OR OXYGEN IN

OZONE GENERATOR

COMPRESSOR

OTHER WELLS

PROGRAMMABLE
VALVES

GAS LINE TO TOP
ZONE

GAS LINE TO
BOTTOM ZONE

WELL CASING
UPPER WELL
SCREEN
WATER FLOW

WATER

TOP OF
GROUNDWATER
(CONTAMINATED)

FIXED PACKER
(REMOVABLE
CLOSURE PLUG)

FINE BUBBLE
PRODUCTION
CHAMBER

UPPER
SPARGEPOINT

LOWER WELL
SCREEN

PUMP
CHECK VALVE

PLUG

BOTTOM
SPARGEPOINT

FIGURE 2

18

FIGURE 3

EP 0 851 843 B1

1  AC TO DC POWER CONVERTER (OR TRICKLE CHARGED LEAD ACID BATTERY)

2  OZONE GENERATOR

3  WELL GAS RELAYS (3 WELLS SHOWN)

4  COMPRESSOR

5  MASTER RELAY

6  15A  MAIN FUSE

7  PROGRAMMABLE  TIMER - CONTROLLER

8  POWER  STRIP

9  GAS REGULATOR AND PRESSURE GAGE

10  SOLENOID  MANIFOLD  (NUMBER DEPENDS ON SERIES AND NUMBER WELLS)

11  GROUND  FAULT  INTERRUPTOR

12  COOLING  FAN

FIGURE  4

# FIGURE 5A

POWER IN
○120 VAC

COOLING FAN

WELL A

WELL B

WELL C

WELL GAS

WELL PUMP POWER

GAS REGULATION PORT
(OLDER 3500 ONLY)

SERIES 3500
(3 WELLS
SHOWN)

# FIGURE 5B

WELL GAS BOTTOM
ZONE

POWER IN
○120 VAC

COOLING FAN

WELL A

WELL B

WELL C

WELL GAS TOP
ZONE

SERIES 3600
(3 WELLS SHOWN)

WELL PUMP POWER

# FIGURE 6

C - SPARGER ™ SYSTEMS - TYPICAL
REMEDIATION SYSTEM CONFIGURATION

PASS-THROUGH THREADED MICROPOROUS
SPARGEPOINT R ASSEMBLY
(ATTACHES TO TUBING BUNDLE)

1/2 INCH COMPRESSION FITTING (BRASS)

F480 THREADED HDPE MALE FITTING

BUTT-WELD OR SPIN-WELD

MICROPOROUS HDPE SCREEN (5-50 MICRON)

BUTT-WELD OR SPIN-WELD

F480 THREADS (FEMALE)

THREADED BOTTOM SEAL WITH TUBE OPENING

MACHINED HDPE

MACHINED HDPE

PVC OR HDPE TUBING PIPE (2 INCH)

O-RING SEAL

PRESSURE CAVITY (REDUCED VOLUME)

TUBING PASS-THROUGH CAVITY

MICROPOROUS HDPE SCREEN (5-50 MICRON)

F480 THREADS (MALE)

O-RING SEALS

TUBE GUIDE AND BOTTOM OPENING

F480 THREAD (FEMALE)

NOTE:
BOTTOM-MOST UNIT USES SOLID END PLUG AT THIS LOCATION.

FIGURE 7

23

TABLE 1   C-SPARGER ™
MODEL SERIES 3500 AND 3600 SPECIFICATIONS

|  | 3500 SERIES | 3600 SERIES |
|---|---|---|
| CONTROL MODULE EXTERNAL POWER | 120V AC, 15 AMP | 120V AC, 15AMP |
| WELL PUMPS POWER | 12V DC POWER ★CONVERTER | 12V DC POWER CONVERTER |
| COMPRESSOR | 3/4HP (NOT FOR CONTINUOUS SERVICE) | 3/4HP (CONTINUOUS OK) |
| OZONE GENERATOR | ATS-250 | VCX-2 |
| GAS TUBING | 1/4 IN. | 3/8 IN. |
| BOX SIZE | 28″X20X11″ | 33″X25X12″ |
| APPROX. WT CONTROL MOD. | 73LBS (M-3503) | 100LBS (M-3603) |
| PUMP/GAS LINE LENGTH (1 FOR EACH WELL) | 100 FT. | 100 FT. |

★CURRENT PRODUCTION, EARLIER UNITS USED A TRICKLE CHARGED LEAD ACID BATTERY.

GAS GENERATOR
COMPRESSOR
PUMP CONTROL
ELECTRIC POWER

OUTSIDE WEATHER BOX
TIMER
POWER IN
AIR FEED LINE
BUBBLE ZONE (AERATION)
GROUND WATER LEVEL
GROUNDWATER MOUNDING DURING OPERATION
FIXED PACKER
MICROPOROUS AIR AND OZONE
AIR/OZONE LINE
WATER PUMP CHECK VALVE
1 INCH SPARGEPOINT
BENTONITE OR GROUT
10 SLOT PACK (FINE TO MEDIUM SAND)

INLET SCREEN
RECIRCULATING WATER
CASING (10-20FT)
OUTLET SCREEN
2 FT
2 INCH SPARGEPOINT

FIGURE 8A

24

TABLE 1   C-SPARGER ™
MODEL SERIES 3500 AND 3600 SPECIFICATIONS

| IN-WELL UNIT (EACH WELL) | 3500 SERIES | 3600 SERIES |
|---|---|---|
| FIXED PACKER | 4-6 IN. | 4-6 IN. |
| SPARGEPOINT ™ TOP | 1 IN. | 1 IN. |
| BOTTOM | 2 IN | ----- |
| WATER PUMP | XP-30 FT | XP-30 FT |
| INLET AND OUTLET SCREENS | 10-20 SLOTS/FT | 10-20 SLOTS/FT |
| CHECK VALVE WATER | ONE, 1/4 IN | ONE, 1/4 IN |
| TIMER / CONTROLLER | PSCZ-600Z | PSCZ-900Z |

FIGURE 8B